# EUROPEAN PATENT SPECIFICATION

(11) **EP 1 077 866 B1**
(45) Date of publication and mention of the grant of the patent: **27.08.2003**
(21) Application number: 98917530.2
(22) Date of filing: 15.05.1998
(51) Int. Cl.: B62J 1/16

(54) **MOUNTING ASSEMBLY FOR A BABY SEAT**
MONTAGEAUFBAU FÜR BABYSITZ
ENSEMBLE DE FIXATION POUR SIEGE DE BEBE

(43) Date of publication of application: 28.02.2001
(73) Proprietor: HAMAX AS, 1679 Krakeroy (NO)
(72) Inventor: HERMANSEN, Leif, N-1684 Vesteroy (NO)
(74) Representative: Popp, Eugen, Dr.
(86) International application number: IB9800742
(87) International publication number: WO99059863

(56) References cited:
- EP-A- 0 572 884
- DE-A- 19 519 853
- NL-A- 8 303 085
- US-A- 5 104 188

## Description

The present invention relates to a mounting assembly for securing a baby seat on a bicycle. More particularly, the invention relates to the securement of the baby seat to the bicycle in a manner in which the relative position of the baby seat to the lengthwise position of the mounted seat in travel direction of the bicycle can be adjusted. Such a mounding assembly according to the preamble of claim 1 is shown by US-A-5,104,188.

Baby seats are conventionally mounted at various positions on a bicycle, for example behind the seat and above the rear bicycle wheel or in front of the seat but behind the handle bars. Depending on the size of the adult riding the bicycle and/or the size of the baby, it is desirable to adjust the lengthwise or travel direction of the bicycle. Adjustment mechanisms are known, however, these often require complicated manipulations and sometimes the additional use of tools. The object of the present invention is to provide a mounting assembly for a baby seat which on the one hand allows simple manual adjustment and on the other hand provides for reliable securement of the baby seat once it has been adjusted.

According to the present invention, a mounting assembly for supporting a baby seat on a bicycle is provided as defined in Claim 1. Embodiments of the assembly are defined in the dependent claims. The mounting assembly comprises carrier means fixable to the bicycle itself having a support bracket, which preferably undertakes a horizontal position. A seat bracket attached to the underside of the baby seat is engageable with the support bracket, whereby the seat bracket can be adjusted in a lengthwise direction relative to the support bracket. A securement shaft is mounted to the baby seat in a manner to urge the seat bracket and support bracket into engagement. The securement shaft is provided with eccentric portions and is rotatable between a closed position and an open position. In the closed position, the cam surfaces of the eccentric portions urge the seat bracket and the support bracket into fixed engagement. In the open position, the eccentric portions allow the seat bracket and support bracket to disengage from one another and to be moved relative to one another.

By use of the securement shaft, it is possible to perform readjustment of the position of the baby seat by the simple manual operation of rotating the securement shaft.

In another embodiment, the locking means comprise a knob disposed at the end of the shaft to facilitate the turning operation.

The mounting assembly of the present invention comprises very few parts and has the advantage of simple construction. The mounting struts for the securement shaft can be formed integrally for example by injection moulding with the baby seat itself. The carrier means include carrier rods for fixing the support bracket to the bicycle. To improve stability, the carrier rods are passed through holes in a wall of the baby seat and continue to the underside of the baby seat where the support bracket engages the seat bracket.

Further objects and advantages of the present invention will become apparent in the following description of embodiments in conjunction with the drawings.
- Fig. 1: shows a mounting assembly for a baby seat according to a first embodiment of the invention;
- Figs. 2a and 2b: show the mounting assembly according to another embodiment by which the baby seat is mounted behind the bicycle seat;
- Figs. 3a and 3b: show perspective views of the mounting assembly.

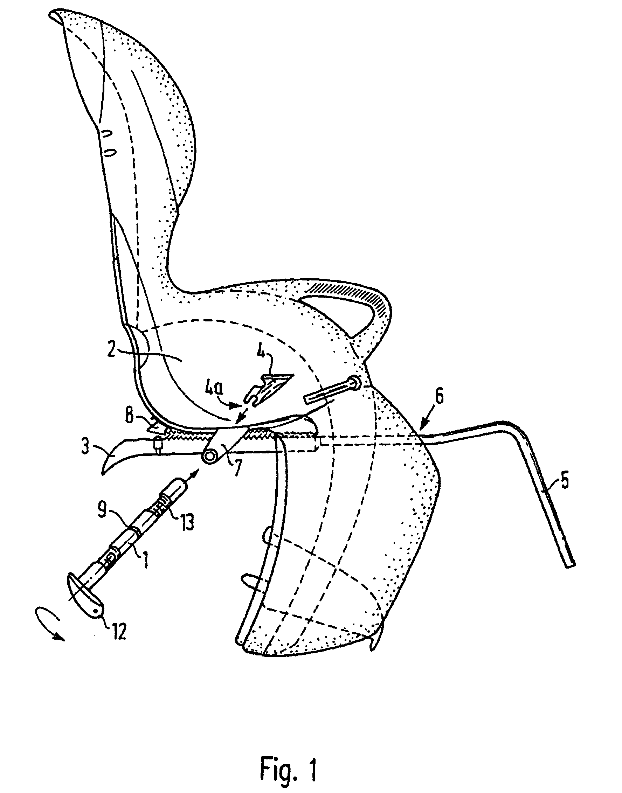

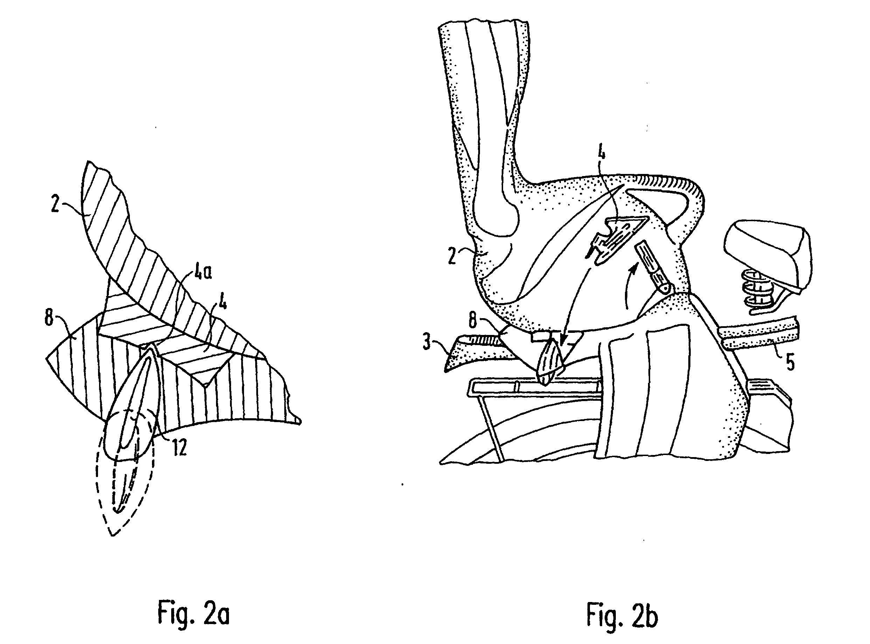

Now referring to Fig. 1, a first embodiment of the invention will be described. The mounting assembly comprises carrier means which include the connector rods 5, the free ends of which may be fixed to the bicycle by suitable means. As shown in the embodiment of Fig. 2, the connector rods would be secured to the frame of the bicycle holding the bicycle seat. Although the embodiment relates a position behind the bicycle seat, the present invention is not restricted to this configuration. The mounting assembly could also be used to support the baby seat between the bicycle handle bars and the bicycle seat.

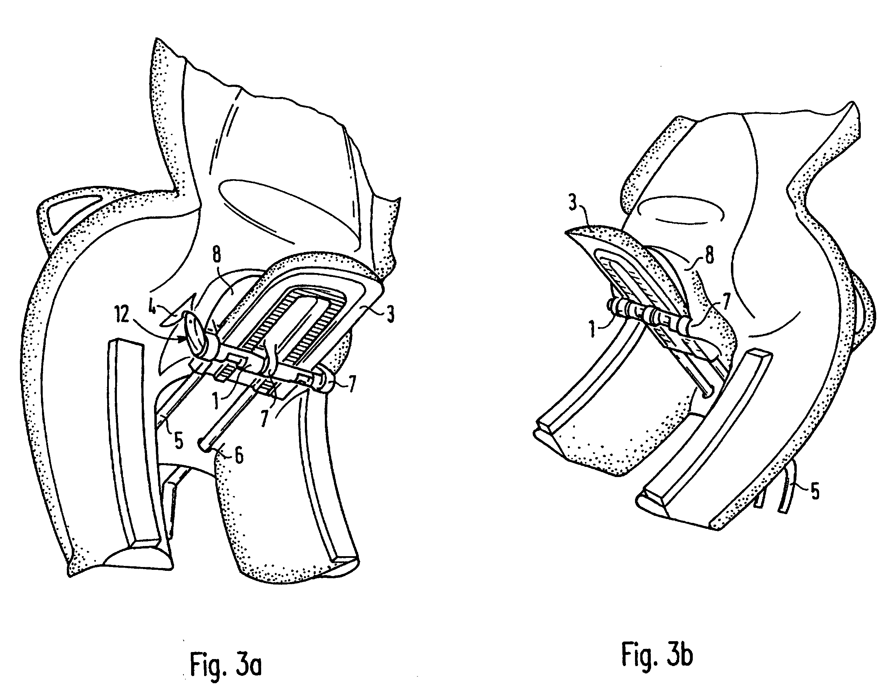

The other ends of the connector rods hold a support bracket 3 as best shown in Figs. 3a and 3b. Preferably, the connector rods 5 extend through holes 6 in a front wall of the baby seat 2. The holes 6 are dimensioned to allow a frictional fit of the connector rods, whereby relative motion between the rods 5 and the holes 6 is possible. The arrangement provides additional stability between the carrier means and the baby seat against any twisting or tipping motion of the baby seat 2 with respect to the bicycle.

A seat bracket 8 is attached to the underside of the baby seat 2, which may be a separate element or may be integrally formed with the baby seat. The seat bracket 8 rests on the support bracket 3, however the two brackets are adjustable in lengthwise direction with respect to one another when not urged into fixed engagement.

As shown in Fig. 1, a securement shaft 1 is mounted to the baby seat by means of mounting struts 7. The struts 7 as also seen in Figs. 3a and 3b are preferably integrally moulded with the baby seat 2. The struts are provided with bores to receive the securement shaft 1 therebetween. As shown in Fig. 1, the securement shaft has eccentric portions 13. When rotated to the closed position as shown in Fig. 3a, the cam surfaces of the eccentric portions 13 urge the seat bracket 8 and the support bracket 3 into fixed engagement. As shown in Fig. 1, the seat bracket 8 and the support bracket 3 are formed with engaging surfaces having ridges which interlock with one another. Preferably, a saw-tooth like structure of ridges running perpendicular to the lengthwise direction are formed in both the seat bracket 8 and the support bracket 3.

When the securement shaft 1 is rotated to the open position, the cam surfaces of the eccentric portions 13 release the seat bracket from the support bracket such that their engaging surfaces can be separated from one another. In the disengaged or opened position of the securement shaft 1, the two brackets can then be moved relative to one another in the lengthwise direction. When the proper adjustment has been made, the securement shaft 1 is then simply rotated manually to the closed position.

Locking means are preferably provided to prevent rotation of the securement shaft 1 away from the closed position once set. In the embodiment of Fig. 1, the locking means comprise a key element 4 which can be inserted through a slot (not shown) in the base of the baby seat 2. The key element 4 has a tip portion 4a which is adapted to engage with a slot 9 in the securement shaft 1 as shown in Fig. 1. Thus when the lengthwise position of the baby seat is to be adjusted, the key element can be removed manually whereby the securement shaft 1 is free to rotate to the opened position. After readjustment, the securement shaft 1 is rotated back to the closed position and the key element 4 inserted to lock the securement shaft 1.

In another embodiment as shown in Figs. 2a and 2b, the securement shaft 1 is provided with a turning knob 12 at one outer end. As shown in Fig. 2a, the key element 4 is inserted through a slot (not shown) in the base of the baby seat as described above. In this case, however, the slot is positioned such that the tip end 4a of the key element 4 engages the handle to hold it in the closed position as shown in Fig. 2a. When the key element 4 is removed, the securement shaft 1 can be moved by the knob 12 into the open position as shown by the phantom lines in Fig. 2a. Of course, the key element 4 and the turning knob 12 can be located on the outer end of the securement shaft 1 as shown in Fig. 3a.

As mentioned above, the carrier rods 5 for supporting the baby seat pass through holes 6 in a wall of the baby seat as best shown in Figs. 3a and 3b. This arrangement allows better stability of the baby seat against a tipping forward or backward of the baby seat. Additional stability is also provided against any sideward movement of the baby seat, which is especially important when turning corners on the bicycle.

## Claims

1. Mounting assembly for supporting a baby seat on a bicycle, comprising:
carrier means (3, 5) fixable to the bicycle and having a support bracket (3),
a bracket (8) disposable on the underside of the baby seat to be engageable with the support bracket (3), wherein the relative position of the bracket (8) to the support bracket (3) is adjustable in the travel direction of the bicycle,
a securement shaft (1) mountable to the baby seat and provided with eccentric portions (13), the securement shaft (1) being rotatable to a closed position in which the eccentric portions hold the bracket (8) and support bracket (3) in fixed engagement and to an open position in which the eccentric portions (13) allow the bracket (8) and support bracket (3) to be disengaged and moved relative to one another,
locking means (4, 9) to prevent rotation of the securement shaft (1) away from the closed position,
**characterized in that**
the locking means comprise a key element (4) formed to be inserted into a slot in the baby seat, the tip of the key element (4) when inserted engaging with a slot (9) in the securement shaft (1) to prevent its rotation.

2. The assembly of claim 1, wherein the engaging surface of the bracket (8) is formed with saw-tooth ridges which interlock in form fit manner with corresponding saw-tooth ridges on the engaging surface of the support bracket (3).

3. The assembly of claim 1 or 2, wherein the securement shaft (1) is mounted to the baby seat (2) by mounting struts (7) extending from and integrally formed with the baby seat (2).

4. The assembly of claim 3, wherein one end of the securement shaft (1) is provided with a turning knob (12).

5. The assembly of any one of claims 1 to 4, wherein said carrier means (3, 5) include carrier rods (5) for fixing the support bracket (3) with respect to the bicycle, the carrier rods (5) being adapted to pass through holes (6) in a wall of the baby seat so as to extend to the underside of the baby seat where the support bracket (3) is held.

## Patentansprüche

1. Montageanordnung zum Abstützen eines Kindersitzes an einem Fahrrad, die folgendes aufweist:
eine Trageinrichtung (3, 5), die an dem Fahrrad befestigbar ist und einen Stützträger (3) hat,
eine Halterung (8), die an der Unterseite des Kindersitzes so angeordnet werden kann, daß sie mit dem Stützträger (3) in Eingriff bringbar ist, wobei die relative Position der Halterung (8) zu dem Stützträger (3) in der Fahrtrichtung des Fahrrads einstellbar ist,
einen Befestigungsschaft (1), der an dem Kindersitz anbringbar und mit exzentrischen Bereichen (13) versehen ist, wobei der Befestigungsschaft (1) in eine geschlossene Position, in der die exzentrischen Bereiche die Halterung (8) und den Stützträger (3) in festem Eingriff halten, und in eine offene Position drehbar ist, in der die exzentrischen Bereiche (13) zulassen, daß die Halterung (8) und der Stützträger (3) außer Eingriff gebracht und relativ zueinander bewegt werden,
eine Verriegelungseinrichtung (4, 9), um eine Drehung des Befestigungsschafts (1) weg von der geschlossenen Position zu verhindern,
**dadurch gekennzeichnet, daß**
die Verriegelungseinrichtung ein Keilelement (4) aufweist, das zum Einführen in einen Schlitz in dem Kindersitz ausgebildet ist, wobei nach dem Einführen das Vorderende des Keilelements (4) mit einem Schlitz (9) in dem Befestigungsschaft (1) in Eingriff gelangt, um dessen Drehung zu verhindern.

2. Anordnung nach Anspruch 1, wobei die Eingriffsoberfläche der Halterung (8) mit Sägezahnrippen ausgebildet ist, die formschlüssig mit entsprechenden Sägezahnrippen an der Eingriffsoberfläche des Stützträgers (3) verriegelbar sind.

3. Anordnung nach Anspruch 1 oder 2, wobei der Befestigungsschaft (1) an dem Kindersitz (2) mittels Montagestreben (7) angebracht ist, die vom Kindersitz ausgehen und mit diesem einstückig ausgebildet sind.

4. Anordnung nach Anspruch 3, wobei ein Ende des Befestigungsschafts (1) mit einem Drehknopf (12) versehen ist.

5. Anordnung nach einem der Ansprüche 1 bis 4, wobei die Trageinrichtung (3, 5) Tragstangen (5) zum Befestigen des Stützträgers (3) in bezug auf das Fahrrad aufweist, wobei die Tragstangen (5) so ausgebildet sind, daß sie durch Löcher (6) in einer Wand des Kindersitzes hindurch verlaufen, um sich zu der Unterseite des Kindersitzes zu erstrecken, wo der Stützträger (3) gehalten wird.

## Revendications

1. Ensemble de fixation pour fixer un siège bébé sur une bicyclette, comprenant :
des moyens porteurs (3, 5) pouvant être fixés à la bicyclette et ayant une patte de fixation (3),
un support (8) devant être placé sous le siège bébé afin de s'engager avec la patte de fixation (3), la position relative du support (8) par rapport à la patte de fixation (3) étant ajustable dans le sens de déplacement de la bicyclette,
un axe de fixation (1) pouvant être fixé au siège bébé et pourvu de parties excentriques (13), l'axe de fixation (1) pouvant pivoter en position fermée, dans laquelle les parties excentriques maintiennent le support (8) et la patte de fixation (3) en position d'engagement fixe, et en position ouverte, dans laquelle les parties excentriques (13) permettent au support (8) et à la patte de fixation (3) d'être dégagés et déplacés l'un par rapport à l'autre,
des moyens de blocage (4. 9) pour empêcher la rotation de l'axe de fixation (1) en dehors de la position fermée,
**caractérisé en ce que**
les moyens de blocage comprennent un élément dé (4) destiné à être inséré dans une encoche dans le siège bébé, le bout de l'élément clé (4) une fois inséré s'engageant avec une encoche (9) dans l'axe de fixation (1) pour en empêcher la rotation.

2. Ensemble de la revendication 1, dans lequel la surface d'engagement du support (8) présente des arêtes en dents de scie qui assurent un verrouillage réciproque avec les arêtes en dents de scie correspondantes sur la surface d'engagement de la patte de fixation (3).

3. Ensemble selon la revendication 1 ou 2, dans lequel l'axe de fixation (1) est installé sur le siège bébé (2) par des montants de fixation (7) s'étendant du siège bébé et ne formant qu'une seule pièce avec le siège bébé (2).

4. Ensemble selon la revendication 3, dans lequel une extrémité de l'axe de fixation (1) comporte un bouton tournant (12).

5. Ensemble selon l'une quelconque des revendications 1 à 4, dans lequel les moyens porteurs (3, 5) comprennent des tiges porteuses (5) pour fixer la patte de fixation (3) par rapport à la bicyclette, les tiges porteuses (5) étant adaptées pour passer à travers des trous (6) dans une paroi du siège bébé de façon à s'étendre sous le siège bébé sur lequel est fixée la patte de fixation (3).
